(19) Europäisches Patentamt
European Patent Office
Office européen des brevets

(11) **EP 3 886 048 B1**

(12) **EUROPEAN PATENT SPECIFICATION**

(45) Date of publication and mention
of the grant of the patent:
**21.02.2024 Bulletin 2024/08**

(51) International Patent Classification (IPC):
**G06T 11/20** (2006.01) **G06T 7/246** (2017.01)
**G06T 7/73** (2017.01) **G06T 3/40** (2024.01)
**G01C 21/28** (2006.01)

(21) Application number: **19913891.8**

(22) Date of filing: **28.06.2019**

(52) Cooperative Patent Classification (CPC):
**G06T 3/4038; G01C 21/28; G06T 7/248;
G06T 7/74;** G06T 2207/10016; G06T 2207/10028;
G06T 2207/30241; G06T 2210/61

(86) International application number:
**PCT/CN2019/093531**

(87) International publication number:
**WO 2020/155543 (06.08.2020 Gazette 2020/32)**

(54) **SLAM MAP JOINING METHOD AND SYSTEM**

VERFAHREN UND SYSTEM ZUM VERBINDEN VON SLAM-KARTEN

PROCÉDÉ ET SYSTÈME DE JONCTION DE CARTES SLAM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.02.2019 CN 201910102625**

(43) Date of publication of application:
**29.09.2021 Bulletin 2021/39**

(73) Proprietor: **Guangzhou Xiaopeng Motors
Technology Co., Ltd.
Guangzhou 510640 (CN)**

(72) Inventors:
• **ZHOU, Jian**
**Guangzhou, Guangdong 510000 (CN)**
• **LIU, Zhongyuan**
**Guangzhou, Guangdong 510000 (CN)**
• **LI, Liang**
**Guangzhou, Guangdong 510000 (CN)**
• **XIAO, Zhiguang**
**Guangzhou, Guangdong 510000 (CN)**

(74) Representative: **Isarpatent
Patent- und Rechtsanwälte Barth
Charles Hassa Peckmann & Partner mbB
Friedrichstrasse 31
80801 München (DE)**

(56) References cited:
CN-A- 105 783 913        CN-A- 107 515 891
CN-A- 109 887 053        US-A1- 2009 248 304
US-A1- 2015 103 183      US-A1- 2016 179 830

• HU HUAN ET AL: "Multiple Maps for the
Feature-based Monocular SLAM System",
JOURNAL OF INTELLIGENT, SPRINGER
NETHERLANDS, DORDRECHT, vol. 94, no. 2, 17
May 2018 (2018-05-17), pages 389-404,
XP036749093, ISSN: 0921-0296, DOI:
10.1007/S10846-018-0829-1 [retrieved on
2018-05-17]
• GEORGES YOUNES ET AL: "Keyframe-based
monocular SLAM: design, survey, and future
directions", ROBOTICS AND AUTONOMOUS
SYSTEMS, vol. 98, December 2017 (2017-12),
pages 67-88, XP055497793, AMSTERDAM, NL
ISSN: 0921-8890, DOI:
10.1016/j.robot.2017.09.010

**(Cont. next page)**

EP 3 886 048 B1

- **SEHWAN KIM ET AL: "Relocalization using virtual keyframes for online environment map construction", PROCEEDINGS OF THE 16TH ACM SYMPOSIUM ON VIRTUAL REALITY SOFTWARE AND TECHNOLOGY; NOVEMBER 18 - 20, 2009, KYOTO, JAPAN, ACM, 2 PENN PLAZA, SUITE 701 NEW YORK NY 10121-0701 USA, 18 November 2009 (2009-11-18), pages 127-134, XP058210123, DOI: 10.1145/1643928.1643958 ISBN: 978-1-60558-869-8**

## Description

### TECHNICAL FIELD

The present disclosure relates to the technical field of automatic drive, in particular to a SLAM map stitching method and a SLAM map stitching system.

### BACKGROUND

In recent years, simultaneous positioning and mapping (SLAM) has been applied to autonomous vehicles more and more rapidly to realize positioning and mapping when the vehicles travel in an unknown environment. Wherein, the traditional SLAM process is typically performed as follows: a vehicle collects observation data (such as captured images or point cloud data) of the ambient environment by a vehicle sensor (such as a camera or a laser radar), and the collected observation data are tracked and matched; and pose and motion information corresponding to the vehicle sensor is worked out according to a matching relationship between the observation data to locate the vehicle, and an incremental map is constructed based on vehicle locating information. However, it is realized in practice that when the vehicle is in a condition lacking visual features (such as an underground white-wall road) or in a severe environment (such as on rainy days or being shielded by the windshield wiper), SLAM tracking may be lost in the SLAM process, which leads to a failure to construct a complete SLAM map.

US 2016/0179830 A1 discloses a system, an apparatus, and a method for multiple client simultaneous localization and mapping. Tracking and mapping may be performed locally and independently by each of a plurality of clients. At configurable points in time map data may be sent to a server for stitching and fusion. In response to successful stitching and fusion to one or more maps known to the server, updated position and orientation information relative to the server's maps may be sent back to the clients. Clients may update their local map data with the received server location data. Clients may receive additional map data from the server, which can be used for extending their maps. Clients may send queries to the server for 3D maps, and the queries may include metadata.

US 2015/0103183 A1 discloses a method for tracking device orientation on a portable device is disclosed. The method comprises initializing a device orientation to a sensor orientation, wherein the sensor orientation is based on information from an inertial measurement unit (IMU) sensor. It also comprises initiating visual tracking using a camera on the portable device and capturing a frame. Next, it comprises determining a plurality of visual features in the frame and matching the frame to a keyframe, wherein capture of the keyframe precedes capture of the frame. Subsequently, it comprises computing a rotation amount between the frame and the keyframe. Responsive to a determination that a rotational distance between the frame and the keyframe exceeds a predetermined threshold, promoting the frame to a keyframe status and adding it to a first orientation map and adjusting the frame with all prior captured keyframes.

Document "Multiple Maps for the Feature-based Monocular SLAM System" by Hu Huan et al., JOURNAL OF INTELLIGENT, SPRINGER NETHERLANDS, DORDRECHT, vol. 94, no. 2, 17 May 2018 (2018-05-17), pages 389-404, XP036749093, ISSN: 0921-0296, DOI: 10.1007/S10846-018-0829-1, discloses a multiple map-based SLAM system with four threaded architectures. When multiple maps are introduced, the system works consistently in a large area for significant length of time. A new map is created automatically when tracking fails or the size of the map becomes too large.

### SUMMARY

The application discloses a SLAM map stitching method and a SLAM map stitching system, as defined in the appended set of claims, which can solve the problem of mapping failures caused by the loss of SLAM tracking in the SLAM process and increase the success rate of constructing a complete SLAM map.

Compared with the prior art, the application has the following beneficial effects: according to the application, based on constructed SLAM sub-maps, SLAM initialization is performed again when it is detected that SLAM tracking is lost; then, sensor pose information of a vehicle sensor is calculated according to acquired vehicle pose information to generate a virtual key frame; the two constructed SLAM sub-maps are stitched by means of the virtual key frame, so that the success rate of constructing a complete SLAM map is increased; wherein, the vehicle sensor is a vehicle camera or a vehicle laser radar, and is suitable for visual SLAM or laser SLAM; in addition, the unity and integrity of the SLAM map generated after the sub-maps are stitched are improved by means of global joint optimization performed on the sub-maps; besides, when the SLAM tracking is lost, the pose information of the vehicle is collected to ensure that the motion trajectory of the vehicle is recorded continuously to assist subsequent vehicle navigation.

### BRIEF DESCRIPTION OF THE DRAWINGS

To more clearly explain the technical solutions of the embodiments of the application, drawings configured for describing the embodiments of the application will be briefly introduced below. Obviously, the drawings in the following description merely illustrate some embodiments of the application, and those ordinarily skilled in the art can obtain other drawings according to the following ones without creative labor.

FIG. 1 is a flow chart of a SLAM map stitching method according to one embodiment of the application;

FIG. 2 is a flow chart of a SLAM map stitching method according to another embodiment of the application;

FIG. 3 is a structural diagram of a SLAM map stitching system according to one embodiment of the application;

FIG. 4 is a structural diagram of a SLAM map stitching system according to another embodiment of the application.

DETAILED DESCRIPTION

The technical solutions of the embodiments of the application will be clearly and completely described below in conjunction with the accompanying drawings of the embodiments. Obviously, the embodiments in the following description are merely illustrative ones, and are not all possible ones of the application. All other embodiments obtained by those ordinarily skilled in the art according to the following ones without creative labor should also fall within the protection scope of the application.

It should be noted that terms such as "first", "second", "third" and "fourth" in the specification and claims of the application are used to distinguish different objects, and are not intended to describe a specific sequence. The terms such as "comprise" and "provided with" and any transformations thereof in the embodiments of the application are intended to refer to non-exclusive inclusion. For example, a process, method, system, product or device including a series of steps or units will not be limited to the steps or units listed, or may also comprise steps or units that are not clearly listed, or other intrinsic steps or units of the process, method, product or device.

The embodiments of the application disclose a SLAM map stitching method and system, which solve the problem of mapping failures caused by the loss of SLAM tracking in the SLAM process and increase the success rate of constructing a complete SLAM map. The SLAM map stitching method and system will be described in detail below.

Embodiment 1

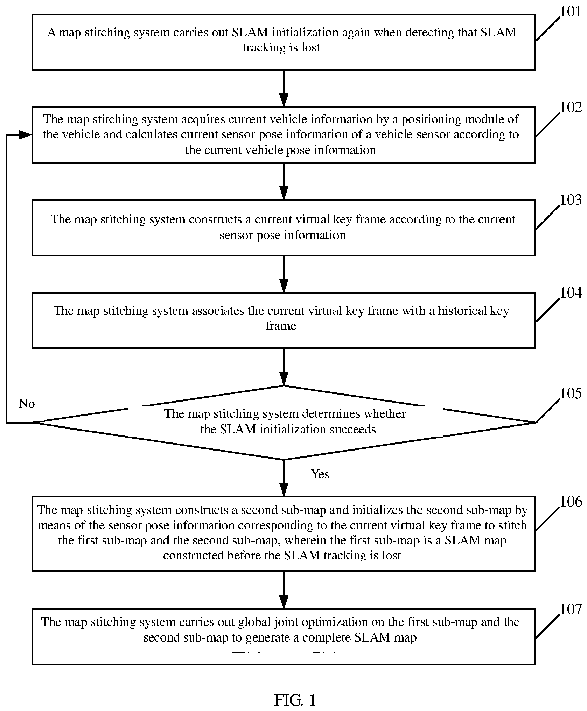

Please refer to FIG. 1 which is a flow chart of a SLAM map stitching method according to one embodiment of the application. As shown in FIG. 1, the SLAM map stitching method is applied to a map stitching system, and may specifically comprise the following steps:
101: the map stitching system performs SLAM initialization again when detecting that SLAM tracking is lost.

This embodiment of the application is suitable for visual SLAM and laser SLAM. The visual SLAM is described by way of example, and typically comprises the following steps:
A front end continuously collects image frames of the ambient environment by means of a vehicle sensor and performs feature point matching on the adjacent image frames, wherein the vehicle sensor may be a vehicle camera such as a monocular camera, a binocular camera, or a depth camera, and the application has no limitation in this aspect. Optionally, for the monocular camera, camera rotation and camera horizontal displacement between the adjacent image frames can be obtained according to a feature point matching result of the adjacent image frames, and then depth information of feature points in each image frame is determined based on the triangulation principle to acquire camera pose information; for the binocular camera, if positional information of two sets of matching 3D feature points is known, the camera pose information can be calculated by ICP (Iterative Closest Point); or, if positional information of two sets of matching 3D feature points and projection positions of the two sets of matching 3D feature points on the camera are known, the camera pose information can be calculated by PnP (Perspective-n-Point).

A rear end detects, by loopback detection, whether the vehicle reaches a previous position and optimizes camera pose information corresponding to different image frames and detection information obtained by loopback detection to acquire a motion trajectory of the vehicle.

Furthermore, a sub-map is constructed according to the motion trajectory of the vehicle and the collected image frames, wherein the sub-map comprises multiple key frames, and based on the camera pose information corresponding to each key frame, the corresponding displacement between the adjacent key frames is greater than or equal to a preset displacement; in addition, the first sub-map may be a 2D raster map, a 2D topological map, a 3D point-cloud map, or a 3D grid map according to the type of the sensor and actual application requirements, and the application has no specific limitation in this aspect.

The SLAM, which is typically based on the principle of laser ranging, is described by way of example as follows: point cloud data of the ambient environment is collected by a laser radar disposed on the vehicle, wherein the point cloud data includes angle information and distance information between the laser radar and an object around; then, pose information of the laser radar is calculated by matching and comparing the point cloud data collected at different moments, and a motion trajectory of the vehicle is obtained based on the pose information of the laser radar to construct a sub-map, wherein the pose information of the laser radar may include a relative movement distance and a pose variation of the laser radar.

It can be understood that the SLAM tracking may fail in the following cases: for the visual SLAM, the number of collected feature points in a current image frame is insufficient in an environment with insufficient light or lacking texture, or the SLAM tracking is lost due to a matching failure of feature points in the current image frame and a previous key frame; for the laser SLAM, the SLAM tracking may be lost due to a matching failure of point cloud data collected at different moments in a dynamic environment (for example, a large number of shelters exist) or in a geometric environment (such as a white wall of a constant shape).

In this embodiment of the application, optionally, for the visual SLAM, the map stitching system performs SLAM initialization again based on the visual SLAM specifically through the following steps:

The map stitching system continuously collects image frames by means of a visual sensor and recognizes feature points in the collected image frames; if the current image frame meets the requirement for the number of feature points and there exists at least one historical key frame that meets the requirements for the number of feature points, feature points in the current image and feature points in the at least one historical image frame are matched, wherein the requirement for the number of feature points may be that the number of feature points is greater than a preset threshold (such as 100); if sensor pose information corresponding to the current image frame is calculated according to a matching result of the current image frame and the at least one historical image frame, depth information of the feature points in the current image frame and depth information of the feature points of the at least one historical key frame, it is considered that the mapping initialization succeeds; otherwise, the step of collecting image frames by means of the visual sensor is performed again.

Optionally, for the laser SLAM, the map stitching system performs the SLAM initialization again as follows: the map stitching system continuously collects point cloud data of the ambient environment by means of a laser radar and matches point cloud data collected at different moments until re-matching succeeds, and at this moment, it is considered that the SLAM initialization succeeds.

102: the map stitching system acquires current vehicle information by a positioning module of the vehicle and calculates current sensor pose information of a vehicle sensor according to the current vehicle pose information.

In this embodiment of the application, the vehicle sensor is a vehicle camera or a vehicle laser radar. The positioning module of the vehicle is a speedometer, a GPS or an inertial integrated navigation system, and the application has no specific limitation in this aspect. The vehicle pose information may be positional information (such as three-dimensional coordinate positions) and pose information of the vehicle in a world coordinate system. For example, the positional information of the vehicle is acquired by the GPS; and the angular speed and accelerated speed of the vehicle in a specific coordinate system are measured by the inertial integrated navigation system to obtain the pose information of the vehicle.

In this embodiment of the application, the vehicle pose information is transformed from a vehicle coordinate system to a sensor coordinate system according to a transformational relationship between the vehicle coordinate system and the sensor coordinate system to obtain sensor pose information of the vehicle sensor in the sensor coordinate system, wherein the transformational relationship between the vehicle coordinate system and the sensor coordinate system can be pre-calibrated. Taking a vehicle camera as an example, the transformational relationship between the vehicle coordinate system and a camera coordinate system can be obtained according to external parameters of the vehicle camera.

103: the map stitching system constructs a current virtual key frame according to the current sensor pose information.

104: the map stitching system associates the current virtual key frame with the historical key frame.

In this embodiment of the application, if the current virtual key frame is a first virtual key frame constructed after the SLAM tracking is lost, the historical key frame is any one key frame in a first sub-map, wherein the first sub-map is a SLAM sub-map constructed before the SLAM tracking is lost; or, if the current virtual key frame is any one virtual key frame constructed after the first virtual key frame, the historical key frame is any one key frame constructed before the current moment. What should be distinguished is that sensor pose information corresponding to virtual key frames is calculated based on vehicle pose information of the vehicle acquired by the positioning module at specific moments, while sensor pose information corresponding to key frames in the first sub-map is calculated based on observation data collected by the vehicle sensor, that is to say, the two types of sensor pose information are acquired in different ways. It can be understood that the current virtual key frame is a virtual key frame constructed at the current moment according to the current sensor pose information.

105: the map stitching system determines whether the SLAM initialization succeeds; if no, Step 102 is performed; or, if yes, Step 106 is performed.

106: the map stitching system constructs a second sub-map and initializes the second sub-map by means of the sensor pose information corresponding to the current virtual key frame to stitch the first sub-map and the second sub-map, wherein the first sub-map is a SLAM map constructed before the SLAM tracking is lost.

In this embodiment of the application, the second sub-map is a SLAM map generated by successful SLAM initialization after the SLAM tracking is lost.

Step 104 specifically comprises:

The map stitching system associates the current virtual key frame with the historical key frame according to the sensor pose information corresponding to the current virtual key frame and sensor pose information corresponding to the historical key frame to update a virtual motion trajectory of the vehicle by means of the sensor pose information corresponding to the current virtual key frame, and joins the updated virtual motion trajectory and a first motion trajectory of the vehicle, wherein the first motion trajectory of the vehicle is generated based on sensor pose information corresponding to all key frames in the first sub-map; the virtual motion trajectory of the vehicle consists of multiple virtual key frames constructed after tracking of feature points in the current image frame of the first sub-map fails. Generally, the historical key frame may be a key frame constructed closest to the current moment.

In Step 106, the map stitching system initializes the second sub-map by means of the sensor pose information corresponding to the current virtual key frame specifically as follows:

The map stitching system acquires sensor pose information corresponding to an initial key frame according to the sensor pose information corresponding to the current virtual key frame to associate the current virtual key frame with the second sub-map by means of the sensor pose information corresponding to the current virtual key frame and the sensor pose information corresponding to the initial key frame, and joins the updated virtual motion trajectory and a second motion trajectory of the vehicle, wherein the second motion trajectory is generated based on sensor pose information corresponding to all key frames in the second sub-map, and the initial key frame is a key frame that is initially constructed in the second sub-map after the initialization succeeds.

Wherein, optionally, the map stitching system acquires the sensor pose information corresponding to the initial key frame according to the sensor pose information corresponding to the current virtual key frame as follows:

The map stitching system recognizes and matches feature points in an image frame corresponding to the current virtual key frame and feature points in an image frame corresponding to the initial key frame;

The map stitching system acquires the sensor pose information corresponding to the initial key frame according to a matching result of the feature points, depth information of feature points in each image frame, and the sensor pose information corresponding to the current virtual key frame.

By adoption of the optional implementation, the virtual key frame is associated with the first sub-map and is also associated with the second sub-map, so that the first sub-map and the second sub-map can be stitched; in addition, the motion trajectory of the vehicle in the whole positioning and mapping process can be kept continuous based on the virtual motion trajectory consisting of a plurality of virtual key frames including vehicle pose information.

107: the map stitching system performs global joint optimization on the first sub-map and the second sub-map to generate a complete SLAM map.

According to the method described in FIG. 1, based on constructed SLAM sub-maps, SLAM initialization is performed again when it is detected that SLAM tracking is lost; then, sensor pose information of a vehicle sensor is calculated according to acquired vehicle pose information to generate a virtual key frame, and the two SLAM sub-maps constructed are stitched by means of the virtual key frame, so that the success rate of constructing a complete SLAM map is increased; wherein, the vehicle sensor is a vehicle camera or a vehicle laser radar, and is suitable for visual SLAM or laser SLAM; in addition, global joint optimization is performed on the sub-maps, so that the unity and integrity of the SLAM map generated after the sub-maps are stitched are improved; besides, when the SLAM tracking is lost, the pose information of the vehicle is collected to ensure that the motion trajectory of the vehicle can be recorded continuously to assist in subsequent vehicle navigation.

Embodiment 2

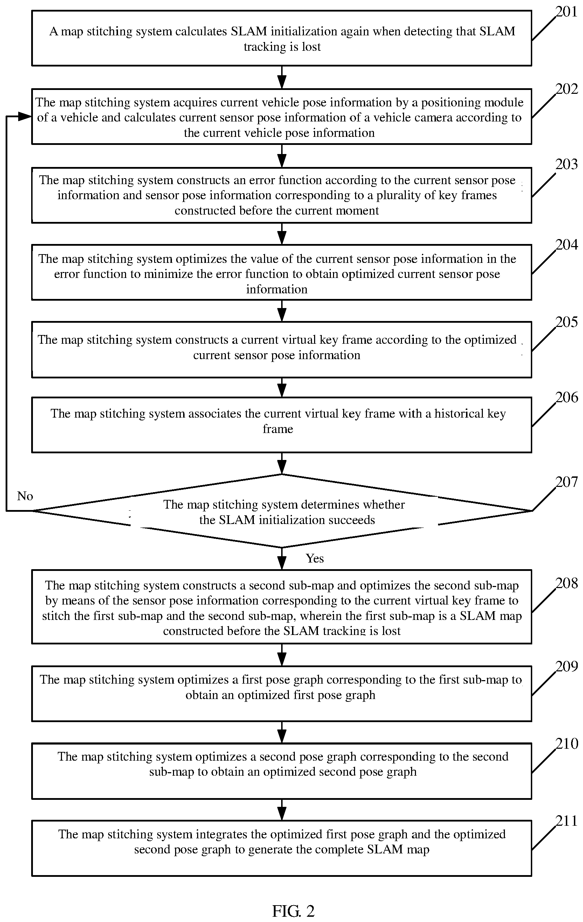

Please refer to FIG. 2 which is a flow chart of a SLAM stitching method according to another embodiment of the application. As shown in FIG. 2, the SLAM map stitching method comprises the following steps:

201: a map stitching system performs SLAM initialization again when detecting that SLAM tracking is lost.

202: the map stitching system acquires current vehicle pose information by a positioning module of a vehicle and calculates current sensor pose information of a vehicle camera according to the current vehicle pose information.

203: the map stitching system constructs an error function according to the current sensor pose information and sensor pose information corresponding to a plurality of key frames constructed before the current moment.

In this embodiment of the application, the plurality of key frames constructed before the current moment may be at least two key frames in a first sub-map, or combinations of key frames in the first sub-map and virtual key frames constructed before the current moment, or at least two virtual key frames constructed after the SLAM tracking is lost and before the current moment.

204: the map stitching system optimizes the value of the current sensor pose information in the error function to minimize the error function to obtain optimized current sensor pose information.

Optionally, a least-squares error function

$$F(\xi) = \sum_{i=1}^{m} r^2(\xi)$$

is constructed, wherein $r(\xi)$ is a nonlinear function and represents a relative pose variation between the current sensor pose information and the sensor pose information corresponding to the plurality of key frames constructed before the current moment, and $\xi$ represents the sensor pose information corresponding to the virtual key frames. The function $F(\xi)$ is iterated multiple times through an iteration method to work out the value of the current sensor pose information when the error function is minimized, and the value is taken as the optimized current sensor pose information, wherein the iteration method may be a Newton iteration method, a Levenberg-Marquardt iteration method, or the like.

205: the map stitching system constructs a current virtual key frame according to the optimized current sensor pose information.

By performing Steps 203-205, the current sensor pose information is optimized based on the sensor pose information of a plurality of key frames in the first sub-map, so that the accuracy of the optimized current sensor pose information is improved; in addition, the virtual key frame constructed according to the optimized current sensor pose information further participates in generating the virtual motion trajectory of the vehicle, so that an error between the virtual motion trajectory of the vehicle and the motion trajectory of the vehicle in the first sub-map is minimized.

206: the map stitching system associates the current virtual key frame with a historical key frame.

207: the map stitching system determines whether the SLAM initialization succeeds; if no, Step 202 is performed; or, if yes, Steps 208-211 are performed.

208: the map stitching system constructs a second sub-map and optimizes the second sub-map by means of the sensor pose information corresponding to the current virtual key frame to stitch the first sub-map and the second sub-map, wherein the first sub-map is a SLAM map constructed before the SLAM tracking is lost.

After Step 208, the method further comprises the following steps:

Real-time sensor pose information of the vehicle camera is calculated according to real-time vehicle pose information of the vehicle; if it is detected that the real-time sensor pose information matches sensor pose information corresponding to any one virtual key frame in the updated virtual motion trajectory, a position corresponding to any virtual key frame in the updated virtual motion trajectory as taken as a target initial point; and the vehicle is controlled to travel along a path guided by the updated virtual motion trajectory until it is detected that the vehicle enters a positioning scope of the second sub-map.

By adoption of this implementation, when it is detected that the vehicle returns to the position corresponding to any one virtual key frame in the virtual motion trajectory, the vehicle is controlled to travel along a path guided by the virtual motion trajectory, so that autonomous navigation and drive of the vehicle can be realized in a region not covered by a SLAM map.

209: the map stitching system optimizes a first pose graph corresponding to the first sub-map to obtain an optimized first pose graph;

210: the map stitching system optimizes a second pose graph corresponding to the second sub-map to obtain an optimized second pose graph;

211: the map stitching system integrates the optimized first pose graph and the optimized second pose graph to generate the complete SLAM map.

As an optional implementation, for visual SLAM, the first pose graph may comprise first feature nodes constructed according to feature points corresponding to key frames in the first sub-maps and first pose nodes constructed according to sensor pose information corresponding to the key frames. Step 209 is performed specifically as follows: a camera pose variation corresponding to any two first pose nodes in the first pose graph and a depth observable corresponding to the first pose nodes and the first feature nodes are iterated multiple times through an iteration method to minimize an error to obtain the optimized first pose graph, wherein the iteration method may be a Newton iteration method, a Levenberg-Marquardt iteration method, or the like; and the optimized first pose graph provides an optimal camera pose, and an optimal feature point depth is measured.

Similarly, as an optional implementation, for visual SLAM, the second pose graph may comprise second feature nodes constructed according to feature points corresponding to key frames in the second sub-map and second pose nodes constructed according to sensor pose information corresponding to the key frames. Step 210 is performed specifically as follows: a camera pose variation corresponding to any two second pose nodes in the first pose graph and a depth observable corresponding to the second pose nodes and the second feature nodes are iterated multiple times through an iteration method to minimize an error to obtain the optimized second pose graph, wherein the iteration method may be a Newton iteration method, a Levenberg-Marquardt iteration method, or the like; and the optimized second pose graph provides an optimal camera pose, and an optimal feature point depth is measured.

Furthermore, as an optional implementation, Step 211 is specifically performed as follows: an optimized first sub-map is generated based on sensor pose information provided by the first pose graph and feature point depth information of the key frames, an optimized second sub-map is generated based on sensor pose information provided by the optimized second pose graph and feature point depth information of the key frames, and an original completed SLAM map is updated by means of the optimized first sub-map and the optimized second sub-map to obtain an optimized complete SLAM map, wherein the SLAM map may be a three-dimensional map.

Furthermore, optionally, as for the complete SLAM map formed by integrating the first sub-map and the second sub-map, the first sub-map/second sub-map may be a dense three-dimensional map which is rich in features and is constructed by stitching and gradually overlapping image frames collected by the map stitching system through a depth camera and transforming three-dimensional point clouds to a world coordinate system. Within the region of the virtual motion trajectory for stitching the first sub-map and the second sub-map, a sparse sub-map may be constructed in a region where the virtual motion trajectory on the complete SLAM map is located according to image frames collected at the moment corresponding to a plurality of virtual keys when the vehicle moves along the virtual motion trajectory, so as to enrich the contents of the complete SLAM map.

By performing Steps 209-211, pose graph optimization integrating mileages and visual features is performed on the sub-maps, so that a cumulative error caused by multiple image frames is reduced, and the accuracy of the constructed complete SLAM map is improved.

According to the method described in FIG. 2, based on constructed SLAM sub-maps, SLAM initialization is performed again when it is detected that SLAM tracking is lost; then, sensor pose information of a vehicle sensor is calculated according to acquired vehicle pose information to generate a virtual key frame; the two constructed SLAM sub-maps are stitched by means of the virtual key frame, so that the success rate of constructing a complete SLAM map is increased; wherein, the vehicle sensor is a vehicle camera or a vehicle laser radar, and is suitable for visual SLAM or laser SLAM; in addition, when the SLAM tracking is lost, pose information of the vehicle is collected to ensure that the motion trajectory of the vehicle is recorded continuously to assist subsequent vehicle navigation; furthermore, when it is detected that the vehicle returns to the position corresponding to any one virtual key frame in the virtual motion trajectory, the vehicle is controlled to travel along a path guided by the virtual motion trajectory, so that autonomous navigation and drive of the vehicle can be realized in a region not covered by the SLAM map; besides, pose graph optimization integrating mileages and visual features is performed on the sub-maps, so that a cumulative error caused by multiple image frames is reduced, the accuracy of the constructed complete SLAM map is improved, and an error between the virtual motion trajectory of the vehicle and the motion trajectory of the vehicle in the first sub-map is minimized.

Embodiment 3

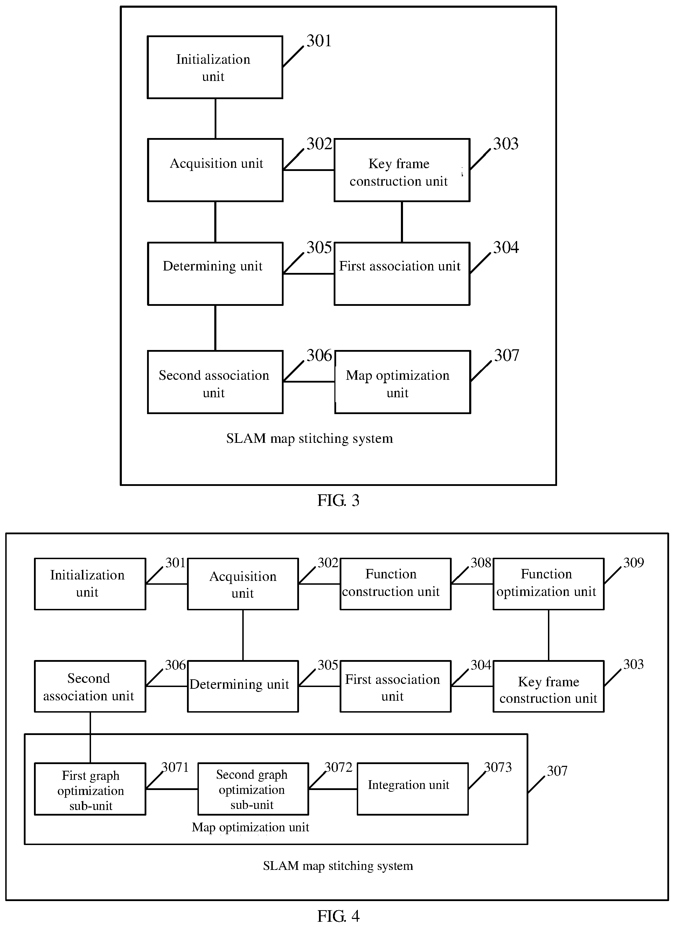

Please refer to FIG. 3 which is a structural diagram of a SLAM stitching system according to one embodiment of the application. As shown in FIG. 3, the SLAM stitching system comprises an initialization unit 301, an acquisition unit 302, a key frame construction unit 303, a first association unit 304, a determining unit 305, a second association unit 306 and a map optimization unit 307, wherein:

The initialization unit 301 is configured for performing SLAM initialization again when detecting that SLAM tracking is lost.

On this embodiment of the application, optionally, for visual SLAM, the initialization unit 301 is configured for performing SLAM initialization again specifically through the following steps:

The initialization unit 301 is configured for continuously collecting image frames by means of a visual sensor and recognizing feature points in the collected image frames, and matching, if a current image frame meets the requirement for the number of feature points and there exists at least one historical key frame that meets the requirements for the number of feature points, feature points in the current image and feature points in the at least one historical image frame, wherein the requirement for the number of feature points may be that the number of feature points is greater than a preset threshold (such as 100); if sensor pose information corresponding to the current image frame is calculated according to a matching result of the current image frame and the at least one historical image frame, depth information of the feature points in the current image frame and depth information of the feature points of the at least one historical key frame, it is considered that the mapping initialization succeeds; otherwise, the step of collecting image frames by the visual sensor is performed again.

Optionally, for laser SLAM, the initialization unit 301 is configured for performing SLAM initialization again specifically through the following steps: the initialization unit 301 is configured for continuously collecting point cloud data of the ambient environment by means of a laser radar and matching point cloud data collected at different moments until re-matching succeeds, and at this moment, it is considered that the SLAM initialization succeeds.

The acquisition unit 302 is configured for acquiring, by a positioning module of a vehicle, current vehicle pose information, and calculating current sensor pose information of a vehicle sensor according to the current vehicle pose information, wherein the vehicle sensor is a vehicle camera or a vehicle laser radar.

The key frame construction unit 303 is configured for constructing a current virtual key frame according to the current sensor pose information.

The first association unit 304 is configured for associating the current virtual key frame with a historical key frame, wherein if the current virtual key frame is a first virtual key frame constructed after the SLAM tracking is lost, the historical key frame is any one key frame in a first sub-map, and the first sub-map is a SLAM sub-map constructed before the SLAM tracking is lost; or, if the current virtual key frame is any one virtual key frame constructed after the first virtual key frame, the historical key frame is any one key frame constructed before the current moment.

The first association unit 304 is configured for associating the current virtual key frame with a historical key frame specifically as follows

The first association unit 304 is configured for associating the current virtual key frame with the historical key frame according to the sensor pose information corresponding to the current virtual key frame and sensor pose information corresponding to the historical key frame to update a virtual motion trajectory of the vehicle by means of the sensor pose information corresponding to the current virtual key frame, and joining the updated virtual motion trajectory and a first motion trajectory of the vehicle, wherein the first motion trajectory of the vehicle is generated based on sensor pose information corresponding to all key frames in the first sub-map; and the virtual motion trajectory of the vehicle consists of multiple virtual key frames constructed after tracking of feature points in the current image frame of the first sub-map fails. Generally, the historical key frame may be a key frame constructed closest to the current moment.

The determining unit 305 is configured for determining whether the SLAM initialization succeeds.

The second association unit 306 is configured for constructing a second sub-map when the determining unit 305 determines that the SLAM initialization succeeds, and initializing the second sub-map according to the sensor pose information corresponding to the current virtual key frame to stitch the first sub-map and the second sub-map.

As an optional implementation, the second association unit 306 is configured for initializing the second sub-map according to the sensor pose information corresponding to the current virtual key frame specifically as follows:

The second association unit 306 is configured for acquiring sensor pose information corresponding to an initial key frame according to the sensor pose information corresponding to the current virtual key frame to associate the current virtual key frame with the second sub-map by means of the sensor pose information corresponding to the current virtual key frame and the sensor pose information corresponding to the initial key frame, and joining the updated virtual motion trajectory and a second motion trajectory of the vehicle, wherein the second motion trajectory is generated based on sensor pose information corresponding to all key frames in the second sub-map, and the initial key frame is a key frame that is initially constructed in the second sub-map after the initialization succeeds.

Wherein, optionally, the second association unit 306 is configured for acquiring the sensor pose information corresponding to the initial key frame according to the sensor pose information corresponding to the current virtual key frame specifically as follows:

The second association unit 306 is configured for recognizing and matching feature points in an image frame corresponding to the current virtual key frame and feature points in an image frame corresponding to the initial key frame, and acquiring the sensor pose information corresponding to the initial key frame according to a matching result of the feature points, depth information of feature points in each image frame, and the sensor pose information corresponding to the current virtual key frame.

The map optimization unit 307 is configured for performing global joint optimization on the first sub-map and the second sub-map to generate a complete SLAM map.

The acquisition unit 302 is also configured for acquiring the current vehicle pose information by the positioning module of the vehicle when the determining unit 305 determines that the SLAM initialization does not succeed.

According to the system shown in FIG. 3, based on constructed SLAM sub-maps, SLAM initialization is performed again when it is detected that SLAM tracking is lost; then, sensor pose information of a vehicle sensor is calculated according to acquired vehicle pose information to generate a virtual key frame, and the two SLAM sub-maps constructed are stitched by means of the virtual key frame, so that the success rate of constructing a complete SLAM map is increased; wherein, the vehicle sensor is a vehicle camera or a vehicle laser radar, and is suitable for visual SLAM or laser SLAM; in addition, global joint optimization is performed on the sub-maps, so that the unity and integrity of the SLAM map generated after the sub-maps are stitched are improved; besides, when the SLAM tracking is lost, the pose information of the vehicle is collected to ensure that the motion trajectory of the vehicle can be recorded continuously to assist in subsequent vehicle navigation.

Embodiment 4

Please refer to FIG. 4 which is a structural diagram of a SLAM map stitching system according to another embodiment of the application. Wherein, the SLAM map stitching system shown in FIG. 4 is obtained by optimizing the SLAM map stitching system shown in FIG. 3. Compared with the SLAM map stitching system in FIG. 3, the SLAM map stitching system in FIG. 4 further comprises a function construction unit 308 and a function optimization unit 309, wherein:

The function construction unit 309 is configured for constructing an error function according to the current sensor pose information of the vehicle sensor and sensor pose information corresponding to a plurality of key frames constructed before the current moment after the acquisition unit 302 calculates the current sensor pose information of the vehicle sensor according to the current vehicle pose information.
The function optimization unit 309 is configured for optimizing the value of the current sensor pose information in the error function to minimize the error function to obtain optimized current sensor pose information;

Optionally, the function construction unit 308 is configured for constructing a least-squares error function

$$F(\xi) = \sum_{i=1}^{m} r^2(\xi)$$

, wherein $r(\xi)$ is a nonlinear function and represents a relative pose variation between the current sensor pose information and the sensor pose information corresponding to the plurality of key frames constructed before the current moment, and $\xi$ represents sensor pose information corresponding to virtual key frames. The function optimization unit 309 is configured for iterating the function $F(\xi)$ multiple times through an iteration method to work out the value of the corresponding current sensor pose information when the error function is minimized, and taking the value as the optimized current sensor pose information, wherein the iteration method may be a Newton iteration method, a Levenberg-Marquardt iteration method, or the like.

The key frame construction unit 303 is configured for constructing a current virtual key frame according to the current sensor pose information specifically as follows:
The key frame construction unit 303 is configured for constructing the current virtual key frame according to the optimized current sensor pose information.

The SLAM map stitching system further comprises a control unit, wherein the control unit is configured for calculating real-time sensor pose information of the vehicle sensor according to real-time vehicle pose information of the vehicle after the second association unit 306 initializes the second sub-map by means of the sensor pose information corresponding to the current virtual key, taking, if it is detected that the real-time sensor pose information matches sensor pose information corresponding to any one virtual key frame in the updated virtual motion trajectory, a position corresponding to any virtual key frame in the updated virtual motion trajectory as a target initial point, and controlling the vehicle to travel along a path guided by the updated virtual motion trajectory until it is detected that the vehicle enters a positioning scope of the second sub-map.

The map optimization unit 307 comprises:

A first graph optimization sub-unit 3071 configured for optimizing a first pose graph corresponding to the first sub-map to obtain an optimized first pose graph;
A second graph optimization sub-unit 3072 configured for optimizing a second pose graph corresponding to the second sub-map to obtain an optimized second pose graph; and
An integration sub-unit 3037 configured for integrating the optimized first pose graph and the optimized second pose graph to generate the complete SLAM map.

As an optional implementation, for visual SLAM, the first pose graph may comprise first feature nodes constructed according to feature points corresponding to key frames in the first sub-maps and first pose nodes constructed according to sensor pose information corresponding to the key frames. The first graph optimization sub-unit 3071 is specifically configured for iterating a camera pose variation corresponding to any two first pose nodes in the first pose graph and a depth observable corresponding to the first pose nodes and the first feature nodes multiple times through an iteration method to minimize an error to obtain the optimized first pose graph, wherein the iteration method may be a Newton iteration method, a Levenberg-Marquardt iteration method, or the like; and the optimized first pose graph provides an optimal camera pose, and an optimal feature point depth is measured.

Similarly, as an optional implementation, for visual SLAM, the second pose graph may comprise second feature nodes constructed according to feature points corresponding to key frames in the second sub-map and second pose nodes constructed according to sensor pose information corresponding to the key frames. The second graph optimization sub-unit 3072 is specifically configured for iterating a camera pose variation corresponding to any two second pose nodes in the first pose graph and a depth observable corresponding to the second pose nodes and the second feature nodes multiple times through an iteration method to minimize an error to obtain the optimized second pose graph, wherein the iteration method may be a Newton iteration method, a Levenberg-Marquardt iteration method, or the like; and the optimized second pose graph provides an optimal camera pose, and an optimal feature point depth is measured.

Furthermore, as an optional implementation, the integration sub-unit 3037 is specifically configured for generating an optimized first sub-map based on sensor pose information provided by the first pose graph and feature point depth information of the key frames, generating an optimized second sub-map based on sensor pose information provided by the optimized second pose graph and feature point depth information of the key frames, and updating an original completed SLAM map by means of the optimized first sub-map and the optimized second sub-map to obtain an optimized complete SLAM map, wherein the SLAM map may be a three-dimensional map.

Furthermore, optionally, regarding the complete SLAM map formed by integrating the first sub-map and the second sub-map, the first sub-map/second sub-map may be a dense three-dimensional map which is rich in features and is constructed by stitching and gradually overlapping image frames collected by the map stitching system through a depth camera and transforming three-dimensional point clouds to a world coordinate system. Within the region of the virtual motion trajectory for stitching the first sub-map and the second sub-map, a sparse sub-map may be constructed in a region where the virtual motion trajectory on the complete SLAM map is located according to image frames collected at the moment corresponding to a plurality of virtual keys when the vehicle moves along the virtual motion trajectory, so as to enrich the contents of the complete SLAM map.

According to the system shown in FIG. 4, based on constructed SLAM sub-maps, SLAM initialization is performed again when it is detected that SLAM tracking is lost; then, sensor pose information of a vehicle sensor is calculated according to acquired vehicle pose information to generate a virtual key frame; the two constructed SLAM sub-maps are stitched by means of the virtual key frame, so that the success rate of constructing a complete SLAM map is increased; wherein, the vehicle sensor is a vehicle camera or a vehicle laser radar, and is suitable for visual SLAM or laser SLAM; in addition, when the SLAM tracking is lost, pose information of the vehicle is collected to ensure that the motion trajectory of the vehicle is recorded continuously to assist subsequent vehicle navigation; furthermore, when it is detected that the vehicle returns to the position corresponding to any one virtual key frame in the virtual motion trajectory, the vehicle is controlled to travel along a path guided by the virtual motion trajectory, so that autonomous navigation and drive of the vehicle can be realized in a region not covered by the SLAM map; besides, pose graph optimization integrating mileages and visual features is performed on the sub-maps, so that a cumulative error caused by multiple image frames is reduced, the accuracy of the constructed complete SLAM map is improved, and an error between the virtual motion trajectory of the vehicle and the motion trajectory of the vehicle in the first sub-map is minimized.

One example of the application not reflected by the appended claims discloses a computer-readable storage medium having a computer program stored therein, wherein the computer program enables a computer to implement the SLAM map stitching method shown in any one of FIG. 1-FIG. 2.

One example of the application not reflected by the appended claims further discloses a computer program product which enables, when run on a computer, the computer to perform all or part of the steps of the above embodiments of the method.

Those ordinarily skilled in the art would appreciate that all or part of the steps of the method in the above embodiments may be implemented by relevant hardware instructed by a program which is stored in a readable storage medium, which is a Read-Only Memory (ROM), a Random Access Memory (RAM), a Programmable Read-only Memory (PROM), an Erasable Programmable Read Only Memory (EPROM), a One-time Programmable Read-Only Memory (EPROM), a One-time Programmable Read-Only Memory (OTPROM), an Electrically-Erasable Programmable Read-Only Memory (EEPROM), a Compact Disc Read-Only Memory (CD-ROM), other optical disc memories, disk memories and magnetic tape memories, or any other computer-readable media for carrying or storing data.

The SLAM map stitching method and system disclosed by the embodiments of the application have been introduced in detail above. In this specification, the principle and implementation of the application are expounded with embodiments, but the description of the above embodiments is merely for assisting those skilled in the art in understanding the method and core concept thereof of the application. The scope of the invention remains defined by the appended claims.

**Claims**

1. A SLAM map stitching method, the method comprising the steps:

performing SLAM initialization again when it is detected that SLAM tracking is lost;
acquiring, by a positioning module of a vehicle, current vehicle pose information, and calculating current sensor pose information of a vehicle sensor according to the current vehicle pose information, wherein the vehicle sensor is a vehicle camera or a vehicle laser radar;
constructing a current virtual key frame according to the current sensor pose information;
associating the current virtual key frame with a historical key frame, wherein if the current virtual key frame is a first virtual key frame constructed after the SLAM tracking is lost, the historical key frame is any one key frame in a first sub-map, and the first sub-map is a SLAM sub-map constructed before the SLAM tracking is lost; or, if the current virtual key frame is any one virtual key frame constructed after the first virtual key frame, the historical key frame is any one key frame constructed before a current moment;
determining whether the SLAM initialization succeeds according to whether the current sensor pose information is calculated according to a matching result;
if the current sensor pose information is not calculated according to a matching result, determining that the SLAM initialization does not succeed, and then performing the steps comprising:

acquiring, by the positioning module of the vehicle, the current vehicle pose information, and calculating the current sensor pose information of the vehicle sensor according to the current vehicle pose information;
constructing a current virtual key frame according to the current sensor pose information; and
associating the current virtual key frame with a historical key frame until the SLAM initialization succeeds, wherein if the current virtual key frame is a first virtual key frame constructed after the SLAM tracking is lost, the historical key frame is any one key frame in a first sub-map, and the first sub-map is a SLAM sub-map constructed before the SLAM tracking is lost; or, if the current virtual key frame is any one virtual key frame constructed after the first virtual key frame, the historical key frame is any one key frame constructed before a current moment;

if the current sensor pose information is calculated according to a matching result, determining that the SLAM initialization succeeds, and then performing the steps comprising:

constructing a second sub-map, and initializing the second sub-map according to the sensor pose information corresponding to the current virtual key frame to stitch the first sub-map and the second sub-map; and
performing global joint optimization on the first sub-map and the second sub-map to generate a complete SLAM map;
wherein the associating the current virtual key frame with a historical key frame, comprises:

associating the current virtual key frame with the historical key frame according to the sensor pose information corresponding to the current virtual key frame and sensor pose information corresponding to the historical key frame to update a virtual motion trajectory of the vehicle by means of the sensor pose information corresponding to the current virtual key frame, and joining the updated virtual motion trajectory and a first motion trajectory of the vehicle, wherein the first motion trajectory of the vehicle is generated based on sensor pose information corresponding to all key frames in the first sub-map;
the step of initializing the second sub-map according to the sensor pose information corresponding to the current virtual key frame comprises:

acquiring sensor pose information corresponding to an initial key frame according to the sensor pose information corresponding to the current virtual key frame to associate the current virtual key frame with the second sub-map by means of the sensor pose information corresponding to the current virtual key frame and the sensor pose information corresponding to the initial key frame, and joining the updated virtual motion trajectory and a second motion trajectory of the vehicle, wherein the second motion trajectory is generated based on sensor pose information corresponding to all key frames in the second sub-map, and the initial key frame is a key frame that is initially constructed in the second sub-map after the initialization succeeds;
wherein after calculating the current sensor pose information of the vehicle sensor according to the current vehicle pose information, the method further comprises:

constructing an error function according to the current sensor pose information of the vehicle sensor and sensor pose information corresponding to a plurality of key frames constructed before the current moment; and
optimizing a value of the current sensor pose information in the error function to minimize the error function to obtain optimized current sensor pose information;
the step of constructing the current virtual key frame according to the current sensor pose information comprises:

constructing the current virtual key frame according to the optimized current sensor pose information; wherein after initializing the second sub-map according to the sensor pose information corresponding to the current virtual key frame, the method further comprises: calculating real-time sensor pose information of the vehicle sensor according to real-time vehicle pose information of the vehicle; if it is detected that the real-time sensor pose information matches sensor pose information corresponding to any one virtual key frame in the updated virtual motion trajectory; and controlling the vehicle to travel along a path guided by the updated virtual motion trajectory until it is detected that the vehicle enters a positioning scope of the second sub-map.

2. The method according to claim 1, **characterized in that**, the step of performing global joint optimization on the first sub-map and the second sub-map to generate a complete SLAM map comprises:

optimizing a first pose graph corresponding to the first sub-map to obtain an optimized first pose graph;
optimizing a second pose graph corresponding to the second sub-map to obtain an optimized second pose graph; and
integrating the optimized first pose graph and the optimized second pose graph to generate the complete SLAM map.

3. A SLAM map stitching system, the system comprising:

an initialization unit (301) configured for performing SLAM initialization again when detecting that SLAM tracking is lost;
an acquisition unit (302) configured for acquiring, by a positioning module of a vehicle, current vehicle pose information, and calculating current sensor pose information of a vehicle sensor according to the current vehicle pose information, wherein the vehicle sensor is a vehicle camera or a vehicle laser radar;
a key frame construction unit (303) configured for constructing a current virtual key frame according to the current sensor pose information;
a first association unit (304) configured for associating the current virtual key frame with a historical key frame, wherein if the current virtual key frame is a first virtual key frame constructed after the SLAM tracking is lost, the historical key frame is any one key frame in a first sub-map, and the first sub-map is a SLAM sub-map constructed before the SLAM tracking is lost; or, if the current virtual key frame is any one virtual key frame constructed after the first virtual key frame, the historical key frame is any one key frame constructed before a current moment;
a determining unit (305) configured for determining whether the SLAM initialization succeeds according to whether the current sensor pose information is calculated according to a matching result;
a second association unit (306) configured for constructing a second sub-map when the determining unit (305) determines that the SLAM initialization succeeds, and initializing the second sub-map according to the sensor pose information corresponding to the current virtual key frame to stitch the first sub-map and the second sub-map; and
a map optimization unit (307) configured for performing global joint optimization on the first sub-map and the second sub-map to generate a complete SLAM map;
wherein, the acquisition unit (302) is also configured for acquiring the current vehicle pose information by the positioning module of the vehicle when the determining unit (305) determines that the SLAM initialization does not succeed;
constructing a current virtual key frame according to the current sensor pose information;
associating the current virtual key frame with a historical key frame, wherein if the current virtual key frame is a first virtual key frame constructed after the SLAM tracking is lost, the historical key frame is any one key frame in a first sub-map, and the first sub-map is a SLAM sub-map constructed before the SLAM tracking is lost; or, if the current virtual key frame is any one virtual key frame constructed after the first virtual key frame, the historical key frame is any one key frame constructed before a current moment;
wherein the first association unit (304) is configured for associating the current virtual key frame with a historical key frame specifically as follows:

the first association unit (304) is configured for associating the current virtual key frame with the historical key frame according to the sensor pose information corresponding to the current virtual key frame and sensor pose information corresponding to the historical key frame to update a virtual motion trajectory of the vehicle by means of the sensor pose information corresponding to the current virtual key frame, and joining the updated virtual motion trajectory and a first motion trajectory of the vehicle, wherein the first motion trajectory of the vehicle is generated based on sensor pose information corresponding to all key frames in the first sub-map;

the second association unit (306) is configured for initializing the second sub-map according to the sensor pose information corresponding to the current virtual key frame specifically as follows:

    the second association unit (306) is configured for acquiring sensor pose information corresponding to an initial key frame according to the sensor pose information corresponding to the current virtual key frame to associate the current virtual key frame with the second sub-map by means of the sensor pose information corresponding to the current virtual key frame and the sensor pose information corresponding to the initial key frame, and joining the updated virtual motion trajectory and a second motion trajectory of the vehicle, wherein the second motion trajectory is generated based on sensor pose information corresponding to all key frames in the second sub-map, and the initial key frame is a key frame that is initially constructed in the second sub-map after the initialization succeeds;

wherein the system further comprises:

    a function construction unit (308) configured for constructing an error function according to the current sensor pose information of the vehicle sensor and sensor pose information corresponding to a plurality of key frames constructed before the current moment after the acquisition unit (302) calculates the current sensor pose information of the vehicle sensor according to the current vehicle pose information; and

    a function optimization unit (309) configured for optimizing a value of the current sensor pose information in the error function to minimize the error function to obtain optimized current sensor pose information;

wherein, the key frame construction unit (303) is configured for constructing a current virtual key frame according to the current sensor pose information specifically as follows:

    the key frame construction unit (303) is configured for constructing the current virtual key frame according to the optimized current sensor pose information.

wherein the system further comprises:

    a control unit configured for calculating real-time sensor pose information of the vehicle sensor according to real-time vehicle pose information of the vehicle, taking a position corresponding to any virtual key frame in the updated virtual motion trajectory if it is detected that the real-time sensor pose information matches sensor pose information corresponding to any one virtual key frame in the updated virtual motion trajectory, and controlling the vehicle to travel along a path guided by the updated virtual motion trajectory until it is detected that the vehicle enters a positioning scope of the second sub-map.

4. The system according to any one of claims 3, **characterized in that**, the map optimization unit (307) comprises:

    a first graph optimization sub-unit configured for optimizing a first pose graph corresponding to the first sub-map to obtain an optimized first pose graph;

    a second graph optimization sub-unit configured for optimizing a second pose graph corresponding to the second sub-map to obtain an optimized second pose graph; and

    an integration sub-unit configured for integrating the optimized first pose graph and the optimized second pose graph to generate the complete SLAM map.

**Patentansprüche**

1. SLAM-Karten-Zusammenfügungsverfahren, wobei das Verfahren die folgenden Schritte umfasst:

erneutes Durchführen einer SLAM-Initialisierung, wenn detektiert wird, dass die SLAM-Verfolgung verloren gegangen ist;
Erfassen, durch ein Positionsbestimmungsmodul eines Fahrzeugs, aktueller Fahrzeuglage-Informationen und Berechnen aktueller Sensorlage-Informationen eines Fahrzeugsensors gemäß den aktuellen Fahrzeuglage-Informationen, wobei der Fahrzeugsensor eine Fahrzeugkamera oder ein Fahrzeuglaserradar ist;
Konstruieren eines aktuellen virtuellen Schlüsselbildes gemäß den aktuellen Sensorlage-Informationen;
Verknüpfen des aktuellen virtuellen Schlüsselbildes mit einem historischen Schlüsselbild, wobei, falls das aktuelle virtuelle Schlüsselbild ein erstes virtuelles Schlüsselbild ist, das nach dem Verlust der SLAM-Verfolgung konstruiert wurde, das historische Schlüsselbild ein Schlüsselbild in einer ersten Teilkarte ist und die erste Teilkarte eine SLAM-Teilkarte ist, die vor dem Verlust der SLAM-Verfolgung konstruiert wurde; oder, falls das aktuelle virtuelle Schlüsselbild ein virtuelles Schlüsselbild ist, das nach dem ersten virtuellen Schlüsselbild konstruiert wurde, das historische Schlüsselbild ein Schlüsselbild ist, das vor einem aktuellen Moment konstruiert wurde;
Bestimmen, ob die SLAM-Initialisierung erfolgreich ist, anhand des Umstandes, ob die aktuellen Sensorlage-Informationen gemäß einem Abgleichergebnis berechnet werden;
falls die aktuellen Sensorlage-Informationen nicht gemäß einem Abgleichergebnis berechnet werden, Bestimmen, dass die SLAM-Initialisierung nicht erfolgreich ist, und anschließendes Durchführen von Schritten, die umfassen:

Erfassen, durch das Positionsbestimmungsmodul eines Fahrzeugs, aktueller Fahrzeuglage-Informationen und Berechnen der aktuellen Sensorlage-Informationen des Fahrzeugsensors gemäß den aktuellen Fahrzeuglage-Informationen;
Konstruieren eines aktuellen virtuellen Schlüsselbildes gemäß den aktuellen Sensorlage-Informationen; und
Verknüpfen des aktuellen virtuellen Schlüsselbildes mit einem historischen Schlüsselbild, bis die SLAM-Initialisierung erfolgreich ist, wobei, falls das aktuelle virtuelle Schlüsselbild ein erstes virtuelles Schlüsselbild ist, das nach dem Verlust der SLAM-Verfolgung konstruiert wurde, das historische Schlüsselbild ein Schlüsselbild in einer ersten Teilkarte ist und die erste Teilkarte eine SLAM-Teilkarte ist, die vor dem Verlust der SLAM-Verfolgung konstruiert wurde; oder, falls das aktuelle virtuelle Schlüsselbild ein virtuelles Schlüsselbild ist, das nach dem ersten virtuellen Schlüsselbild konstruiert wurde, das historische Schlüsselbild ein Schlüsselbild ist, das vor einem aktuellen Moment konstruiert wurde;
falls die aktuellen Sensorlage-Informationen gemäß einem Abgleichergebnis berechnet werden, Bestimmen, dass die SLAM-Initialisierung erfolgreich ist, und anschließendes Durchführen von Schritten, die umfassen:

Konstruieren einer zweiten Teilkarte und Initialisieren der zweiten Teilkarte gemäß den Sensorlage-Informationen, die dem aktuellen virtuellen Schlüsselbild entsprechen, um die erste Teilkarte und die zweite Teilkarte zusammenzufügen; und
Durchführen einer globalen gemeinsamen Optimierung der ersten Teilkarte und der zweiten Teilkarte zum Generieren einer vollständigen SLAM-Karte;
wobei das Verknüpfen des aktuellen virtuellen Schlüsselbildes mit einem historischen Schlüsselbild umfasst:

Verknüpfen des aktuellen virtuellen Schlüsselbildes mit dem historischen Schlüsselbild gemäß den Sensorlage-Informationen, die dem aktuellen virtuellen Schlüsselbild entsprechen, und den Sensorlage-Informationen, die dem historischen Schlüsselbild entsprechen, um eine virtuelle Bewegungstrajektorie des Fahrzeugs mittels der Sensorlage-Informationen, die dem aktuellen virtuellen Schlüsselbild entsprechen, zu aktualisieren, und Verbinden der aktualisierten virtuellen Bewegungstrajektorie und einer ersten Bewegungstrajektorie des Fahrzeugs, wobei die erste Bewegungstrajektorie des Fahrzeugs auf der Grundlage der Sensorlage-Informationen, die allen Schlüsselbildern in der ersten Teilkarte entsprechen, generiert werden;

wobei der Schritt des Initialisierens der zweiten Teilkarte gemäß den Sensorlage-Informationen, die dem aktuellen virtuellen Schlüsselbild entsprechen, umfasst:

Erfassen von Sensorlage-Informationen, die einem anfänglichen Schlüsselbild entsprechen, gemäß den Sensorlage-Informationen, die dem aktuellen virtuellen Schlüsselbild entsprechen, um das aktuelle virtuelle Schlüsselbild mittels der Sensorlage-Informationen, die dem aktuellen virtuellen Schlüsselbild entsprechen, und der Sensorlage-Informationen, die dem anfänglichen Schlüsselbild entsprechen, mit der zweiten Teilkarte zu verknüpfen, und Verbinden der aktualisierten virtuellen Bewegungstrajektorie und einer zweiten Bewegungstrajektorie des Fahrzeugs, wobei die zweite Bewegungstrajektorie auf der Grundlage von Sensorlage-Informationen generiert wird, die allen Schlüsselbildern in der zweiten Teilkarte entsprechen, und das anfängliche Schlüsselbild ein Schlüsselbild ist, das anfänglich in der zweiten Teilkarte konstruiert wird, nachdem die Initialisierung erfolgreich ist;

wobei das Verfahren nach dem Berechnen der aktuellen Sensorlage-Informationen des Fahrzeugsensors gemäß den aktuellen Fahrzeuglage-Informationen des Weiteren umfasst:

Konstruieren einer Fehlerfunktion gemäß den aktuellen Sensorlage-Informationen des Fahrzeugsensors und den Sensorlage-Informationen, die mehreren Schlüsselbildern entsprechen, die vor dem aktuellen Moment konstruiert wurden; und

Optimieren eines Wertes der aktuellen Sensorlage-Informationen in der Fehlerfunktion, um die Fehlerfunktion zu minimieren, um optimierte aktuelle Sensorlage-Informationen zu erhalten;

wobei der Schritt des Konstruierens des aktuellen virtuellen Schlüsselbildes gemäß den aktuellen Sensorlage-Informationen umfasst:

Konstruieren des aktuellen virtuellen Schlüsselbildes gemäß den optimierten aktuellen Sensorlage-Informationen;

wobei das Verfahren nach dem Initialisieren der zweiten Teilkarte gemäß den Sensorlage-Informationen, die dem aktuellen virtuellen Schlüsselbild entsprechen, des Weiteren umfasst:

Berechnen von Echtzeit-Sensorlage-Informationen des Fahrzeugsensors gemäß Echtzeit-Fahrzeuglage-Informationen des Fahrzeugs; falls detektiert wird, dass die Echtzeit-Sensorlage-Informationen mit Sensorlage-Informationen übereinstimmen, die einem virtuellen Schlüsselbild in der aktualisierten virtuellen Bewegungstrajektorie entsprechen; und Steuern des Fahrzeugs so, dass es entlang eines Pfades fährt, der durch die aktualisierte virtuelle Bewegungstrajektorie geführt wird, bis detektiert wird, dass das Fahrzeug in einen Positionsbestimmungsbereich der zweiten Teilkarte eintritt.

**2.** Verfahren nach Anspruch 1, **dadurch gekennzeichnet, dass** der Schritt des Durchführens einer globalen gemeinsamen Optimierung der ersten Teilkarte und der zweiten Teilkarte zum Generieren einer vollständigen SLAM-Karte umfasst:

Optimieren eines ersten Lage-Graphen, der der ersten Teilkarte entspricht, um einen optimierten ersten Lage-Graphen zu erhalten; Optimieren eines zweiten Lage-Graphen, der der zweiten Teilkarte entspricht, um einen optimierten zweiten Lage-Graphen zu erhalten; und Integrieren des optimierten ersten Lage-Graphen und des optimierten zweiten Lage-Graphen, um die vollständige SLAM-Karte zu generieren.

**3.** SLAM-Karten-Zusammenfügungssystem, wobei das System umfasst:

eine Initialisierungseinheit (301), die dafür eingerichtet ist, eine SLAM-Initialisierung erneut durchzuführen, wenn detektiert wird, dass die SLAM-Verfolgung verloren gegangen ist; eine Erfassungseinheit (302), die dafür eingerichtet ist, durch ein Positionsbestimmungsmodul eines Fahrzeugs aktuelle Fahrzeuglage-Informationen zu erfassen und aktuelle Sensorlage-Informationen eines Fahrzeugsensors gemäß den aktuellen Fahrzeuglage-Informationen zu berechnen, wobei der Fahrzeugsensor eine Fahrzeugkamera oder ein Fahrzeuglaserradar ist; eine Schlüsselbild-Konstruktionseinheit (303), die dafür eingerichtet ist, ein aktuelles virtuelles Schlüsselbild gemäß den aktuellen Sensorlage-Informationen zu konstruieren; eine erste Verknüpfungseinheit (304), die dafür eingerichtet ist, das aktuelle virtuelle Schlüsselbild mit einem historischen Schlüsselbild zu verknüpfen, wobei, falls das aktuelle virtuelle Schlüsselbild ein erstes virtuelles Schlüsselbild ist, das nach dem Verlust der SLAM-Verfolgung konstruiert wurde, das historische Schlüsselbild ein Schlüsselbild in einer ersten Teilkarte ist und die erste Teilkarte eine SLAM-Teilkarte ist, die vor dem Verlust der SLAM-Verfolgung konstruiert wurde; oder, falls das aktuelle virtuelle Schlüsselbild ein virtuelles Schlüsselbild ist, das nach dem ersten virtuellen Schlüsselbild konstruiert wurde, das historische Schlüsselbild ein Schlüsselbild ist, das vor einem aktuellen Moment konstruiert wurde; eine Bestimmungseinheit (305), die dafür eingerichtet, anhand des Umstandes, ob die aktuellen Sensorlage-Informationen gemäß einem Abgleichergebnis berechnet werden, zu bestimmen, ob die SLAM-Initialisierung erfolgreich ist; eine zweite Verknüpfungseinheit (306), die dafür eingerichtet ist, eine zweite Teilkarte zu konstruieren, wenn die Bestimmungseinheit (305) bestimmt, dass die SLAM-Initialisierung erfolgreich ist, und die zweite Teilkarte gemäß den Sensorlage-Informationen zu initialisieren, die dem aktuellen virtuellen Schlüsselbild entsprechen, um die erste Teilkarte und die zweite Teilkarte zusammenzufügen; und eine Kartenoptimierungseinheit (307), die dafür eingerichtet ist, eine globale gemeinsame Optimierung der ersten Teilkarte und der zweiten Teilkarte durchzuführen, um eine vollständige SLAM-Karte zu generieren; wobei die Erfassungseinheit (302) außerdem dafür eingerichtet ist, die aktuellen Fahrzeuglage-Informationen durch das Positionsbestimmungsmodul des Fahrzeugs zu erfassen, wenn die Bestimmungseinheit (305) bestimmt, dass die SLAM-Initialisierung nicht erfolgreich ist; Konstruieren eines aktuellen virtuellen Schlüsselbildes gemäß den aktuellen Sensorlage-Informationen; Verknüpfen des aktuellen virtuellen Schlüsselbildes mit einem historischen Schlüsselbild, wobei, falls das aktuelle virtuelle Schlüsselbild ein erstes virtuelles Schlüsselbild ist, das nach dem Verlust der SLAM-Verfolgung konstruiert wurde, das historische Schlüsselbild ein Schlüsselbild in einer ersten Teilkarte ist und die erste Teilkarte eine SLAM-Teilkarte ist, die vor dem Verlust der SLAM-Verfolgung konstruiert wurde; oder, falls das aktuelle virtuelle Schlüsselbild ein virtuelles Schlüsselbild ist, das nach dem ersten virtuellen Schlüsselbild konstruiert wurde, das historische Schlüsselbild ein Schlüsselbild ist, das vor einem aktuellen Moment konstruiert wurde; wobei die erste Verknüpfungseinheit (304) dafür eingerichtet ist, das aktuelle virtuelle Schlüsselbild mit einem historischen Schlüsselbild speziell auf folgende Weise zu verknüpfen:

die erste Verknüpfungseinheit (304) ist eingerichtet zum: Verknüpfen des aktuellen virtuellen Schlüsselbildes mit dem historischen Schlüsselbild gemäß den Sensorlage-Informationen, die dem aktuellen virtuellen Schlüsselbild entsprechen, und den Sensorlage-Informationen, die dem historischen Schlüsselbild entsprechen, um eine virtuelle Bewegungstrajektorie des Fahrzeugs mittels der Sensorlage-Informationen, die dem aktuellen virtuellen Schlüsselbild entsprechen, zu aktualisieren, und Verbinden der aktualisierten virtuellen Bewegungstrajektorie und einer ersten Bewegungstrajektorie des Fahrzeugs, wobei die erste Bewegungstrajektorie des Fahrzeugs auf der Grundlage der Sensorlage-Informationen, die allen Schlüsselbildern in der ersten Teilkarte entsprechen, generiert werden;

die zweite Verknüpfungseinheit (306) ist dafür eingerichtet, die zweite Teilkarte gemäß den Sensorlage-Informationen, die dem aktuellen virtuellen Schlüsselbild entsprechen, speziell auf folgende Weise zu initialisieren: die zweite Verknüpfungseinheit (306) ist eingerichtet zum: Erfassen von Sensorlage-Informationen, die einem anfänglichen Schlüsselbild entsprechen, gemäß den Sensorlage-Informationen, die dem aktuellen virtuellen Schlüsselbild entsprechen, um das aktuelle virtuelle Schlüsselbild mittels der Sensorlage-Informationen, die dem aktuellen virtuellen Schlüsselbild entsprechen, und der Sensorlage-Informationen, die dem anfänglichen Schlüsselbild entsprechen, mit der zweiten Teilkarte zu verknüpfen, und Verbinden der aktualisierten virtuellen Bewegungstrajektorie und einer zweiten Bewegungstrajektorie des Fahrzeugs, wobei die zweite Bewegungstrajektorie auf der Grundlage von Sensorlage-Informationen generiert wird, die allen Schlüsselbildern in der zweiten Teilkarte entsprechen, und das anfängliche Schlüsselbild ein Schlüsselbild ist, das anfänglich in der zweiten Teilkarte konstruiert wird, nachdem die Initialisierung erfolgreich ist; wobei das System des Weiteren umfasst:

    eine Funktionskonstruktionseinheit (308), die dafür eingerichtet ist, eine Fehlerfunktion gemäß den aktuellen Sensorlage-Informationen des Fahrzeugsensors und Sensorlage-Informationen zu konstruieren, die mehreren Schlüsselbildern entsprechen, die vor dem aktuellen Moment konstruiert wurden, nachdem die Erfassungseinheit (302) die aktuellen Sensorlage-Informationen des Fahrzeugsensors gemäß den aktuellen Fahrzeuglage-Informationen berechnet hat; und

eine Funktionsoptimierungseinheit (309), die dafür eingerichtet ist, einen Wert der aktuellen Sensorlage-Informationen in der Fehlerfunktion zu optimieren, um die Fehlerfunktion zu minimieren, um optimierte aktuelle Sensorlage-Informationen zu erhalten;

wobei die Schlüsselbild-Konstruktionseinheit (303) dafür eingerichtet ist, ein aktuelles virtuelles Schlüsselbild gemäß den aktuellen Sensorlage-Informationen speziell auf folgende Weise zu konstruieren:

    die Schlüsselbild-Konstruktionseinheit (303) ist dafür eingerichtet, ein aktuelles virtuelles Schlüsselbild gemäß den aktuellen Sensorlage-Informationen zu konstruieren,

    wobei das System des Weiteren umfasst:

    eine Steuereinheit, die eingerichtet ist zum: Berechnen von Echtzeit-Sensorlage-Informationen des Fahrzeugsensors gemäß Echtzeit-Fahrzeuglage-Informationen des Fahrzeugs; Nehmen einer Position, die einem virtuellen Schlüsselbild in der aktualisierten virtuellen Bewegungstrajektorie entspricht, falls detektiert wird, dass die Echtzeit-Sensorlage-Informationen mit Sensorlage-Informationen übereinstimmen, die einem virtuellen Schlüsselbild in der aktualisierten virtuellen Bewegungstrajektorie entsprechen; und Steuern des Fahrzeugs so, dass es entlang eines Pfades fährt, der durch die aktualisierte virtuelle Bewegungstrajektorie geführt wird, bis detektiert wird, dass das Fahrzeug in einen Positionsbestimmungsbereich der zweiten Teilkarte eintritt.

4.  System nach Anspruch 3, **dadurch gekennzeichnet, dass** die Kartenoptimierungseinheit (307) umfasst:

    eine erste Graphoptimierungs-Untereinheit, die dafür eingerichtet ist, einen ersten Lage-Graphen zu optimieren, der der ersten Teilkarte entspricht, um einen optimierten ersten Lage-Graphen zu erhalten;

eine zweite Graphoptimierungs-Untereinheit, die dafür eingerichtet ist, einen zweiten Lage-Graphen zu optimieren, der der zweiten Teilkarte entspricht, um einen optimierten zweiten Lage-Graphen zu erhalten;

eine Integrations-Untereinheit, die dafür eingerichtet ist, den optimierten ersten Lage-Graphen und den optimierten zweiten Lage-Graphen zu integrieren, um die vollständige SLAM-Karte zu generieren.

## Revendications

1. Procédé d'assemblage de cartes SLAM, comprenant les étapes suivantes :

le fait d'effectuer à nouveau une initialisation SLAM lorsqu'il est détecté qu'un suivi SLAM est perdu ;

l'acquisition, par un module de positionnement d'un véhicule, d'informations de pose de véhicule actuelles, et le calcul d'informations de pose de capteur actuelles d'un capteur de véhicule en fonction des informations de pose de véhicule actuelles, dans lequel le capteur de véhicule est une caméra de véhicule ou un radar laser de véhicule ;

la construction d'une image clé virtuelle actuelle en fonction des informations de pose de capteur actuelles ;

l'association de l'image clé virtuelle actuelle à une image clé historique, dans lequel si l'image clé virtuelle actuelle est une première image clé virtuelle construite après la perte du suivi SLAM, l'image clé historique est n'importe quelle image clé dans une première sous-carte, et la première sous-carte est une sous-carte SLAM construite avant la perte du suivi SLAM ; ou, si l'image clé virtuelle actuelle est une image clé virtuelle quelconque construite après la première image clé virtuelle, l'image clé historique est une image clé quelconque construite avant un moment actuel ;

la détermination du fait de savoir si l'initialisation SLAM réussit selon que les informations de pose de capteur actuelles sont calculées ou non en fonction d'un résultat de correspondance ;

si les informations de pose de capteur actuelles ne sont pas calculées en fonction d'un résultat de correspondance, la détermination du fait que l'initialisation SLAM n'a pas réussi, puis l'exécution des étapes comprenant :

l'acquisition, par le module de positionnement du véhicule,

des informations de pose de véhicule actuelles, et le calcul des informations de pose de capteur actuelles du capteur de véhicule en fonction des informations de pose de véhicule actuelles ;

la construction d'une image clé virtuelle actuelle en fonction des informations de pose de capteur actuelles ; et

l'association de l'image clé virtuelle actuelle à une image clé historique jusqu'à ce que l'initialisation SLAM réussisse, dans lequel si l'image clé virtuelle actuelle est une première image clé virtuelle construite après la perte du suivi SLAM, l'image clé historique est n'importe quelle image clé dans une première sous-carte, et la première sous-carte est une sous-carte SLAM construite avant la perte du suivi SLAM ; ou, si l'image clé virtuelle actuelle est une image clé virtuelle quelconque construite après la première image clé virtuelle, l'image clé historique est une image clé quelconque construite avant un moment actuel ;

si les informations de pose de capteur actuelles sont calculées en fonction d'un résultat de correspondance, la détermination du fait que l'initialisation SLAM réussit, puis l'exécution des étapes comprenant :

la construction d'une seconde sous-carte, et l'initialisation de la seconde sous-carte en fonction des informations de pose de capteur correspondant à l'image clé virtuelle actuelle pour assembler la première sous-carte et la seconde sous-carte ; et

le fait d'effectuer d'une optimisation conjointe globale sur la première sous-carte et la seconde sous-carte pour générer une carte SLAM complète ;

dans lequel l'association de l'image clé virtuelle actuelle à une image clé historique comprend :

l'association de l'image clé virtuelle actuelle à l'image clé historique en fonction des informations de pose de capteur correspondant à l'image clé virtuelle actuelle et des informations de pose de capteur correspondant à l'image clé historique pour mettre à jour une trajectoire de mouvement virtuelle du véhicule au moyen des informations de pose de capteur correspondant à l'image clé virtuelle actuelle, et la jonction de la trajectoire de mouvement virtuelle mise à jour et d'une première trajectoire de mouvement du véhicule, dans lequel la première trajectoire de mouvement du véhicule est générée sur la base d'informations de pose de capteur correspondant à toutes les images clés dans la première sous-carte ;

l'étape d'initialisation de la seconde sous-carte en fonction des informations de pose de capteur correspondant à l'image clé virtuelle actuelle comprend :

l'acquisition d'informations de pose de capteur correspondant à une image clé initiale en fonction des informations de pose de capteur correspondant à l'image clé virtuelle actuelle pour associer l'image clé virtuelle actuelle à la seconde sous-carte au moyen des informations de pose de capteur correspondant à l'image clé virtuelle actuelle et des informations de pose de capteur correspondant à l'image clé initiale, et la jonction de la trajectoire de mouvement virtuelle mise à jour et d'une seconde trajectoire de mouvement du véhicule, dans lequel la seconde trajectoire de mouvement est générée sur la base d'informations de pose de capteur correspondant à toutes les images clés dans la seconde sous-carte, et l'image clé initiale est une image clé qui est construite initialement dans la seconde sous-carte une fois l'initialisation réussie ;

dans lequel, après avoir calculé les informations de pose de capteur actuelles du capteur de véhicule en fonction des informations de pose de véhicule actuelles, le procédé comprend en outre :

la construction d'une fonction d'erreur en fonction des informations de pose de capteur actuelles du capteur de véhicule et des informations de pose de capteur correspondant à une pluralité d'images clés construites avant le moment actuel ; et

l'optimisation d'une valeur des informations de pose de capteur actuelles dans la fonction d'erreur pour minimiser la fonction d'erreur afin d'obtenir des informations de pose de capteur actuelles optimisées ;

l'étape de construction de l'image clé virtuelle actuelle en fonction des informations de pose de capteur actuelles comprend :

la construction de l'image clé virtuelle actuelle en fonction des informations de pose de capteur actuelles optimisées ;

dans lequel, après avoir initialisé la seconde sous-carte en fonction des informations de pose de capteur correspondant à l'image clé virtuelle actuelle, le procédé comprend en outre :

le calcul d'informations de pose de capteur en temps réel du capteur de véhicule en fonction d'informations de pose de véhicule en temps réel du véhicule ; s'il est détecté que les informations de pose de capteur en temps réel correspondent à des informations de pose de capteur correspondant à n'importe quelle image clé virtuelle dans la trajectoire de mouvement virtuelle mise à jour ; et la commande du véhicule pour se déplacer le long d'un chemin guidé par la trajectoire de mouvement virtuelle mise à jour jusqu'à ce qu'il soit détecté que le véhicule entre dans une portée de positionnement de la seconde sous-carte.

**2.** Procédé selon la revendication 1, **caractérisé en ce que** l'étape consistant à effectuer une optimisation conjointe globale sur la première sous-carte et la seconde sous-carte pour générer une carte SLAM complète comprend :

l'optimisation d'un premier graphique de pose correspondant à la première sous-carte pour obtenir un premier graphique de pose optimisé ; l'optimisation d'un second graphique de pose correspondant à la seconde sous-carte pour obtenir un second graphique de pose optimisé ; et l'intégration du premier graphique de pose optimisé et du second graphique de pose optimisé pour générer la carte SLAM complète.

**3.** Système d'assemblage de cartes SLAM, le système comprenant :

une unité d'initialisation (301) configurée pour effectuer à nouveau une initialisation SLAM lorsqu'il est détecté qu'un suivi SLAM est perdu ; une unité d'acquisition (302) configurée pour acquérir, par un module de positionnement d'un véhicule, des informations de pose de véhicule actuelles, et calculer des informations de pose de capteur actuelles d'un capteur de véhicule en fonction des informations de pose de véhicule actuelles, dans lequel le capteur de véhicule est une caméra de véhicule ou un radar laser de véhicule ; une unité de construction d'image clé (303) configurée pour construire une image clé virtuelle actuelle en fonction des informations de pose de capteur actuelles ; une première unité d'association (304) configurée pour associer l'image clé virtuelle actuelle à une image clé historique, dans lequel si l'image clé virtuelle actuelle est une première image clé virtuelle construite après la perte du suivi SLAM, l'image clé historique est n'importe quelle image clé dans une première sous-carte, et la première sous-carte est une sous-carte SLAM construite avant la perte du suivi SLAM ; ou, si l'image clé virtuelle actuelle est une image clé virtuelle quelconque construite après la première image clé virtuelle, l'image clé historique est une image clé quelconque construite avant un moment actuel ; une unité de détermination (305) configurée pour déterminer si l'initialisation SLAM réussit selon que les informations de pose de capteur actuelles sont calculées ou non en fonction d'un résultat de correspondance ; une seconde unité d'association (306) configurée pour construire une seconde sous-carte lorsque l'unité de détermination (305) détermine que l'initialisation SLAM réussit, et initialiser la seconde sous-carte en fonction des informations de pose de capteur correspondant à l'image clé virtuelle actuelle pour assembler la première sous-carte et la seconde sous-carte ; et une unité d'optimisation de carte (307) configurée pour effectuer une optimisation conjointe globale sur la première sous-carte et la seconde sous-carte afin de générer une carte SLAM complète ;

dans lequel l'unité d'acquisition (302) est également configurée pour acquérir les informations de pose de véhicule actuelles par le module de positionnement du véhicule lorsque l'unité de détermination (305) détermine que l'initialisation SLAM échoue ; construire une image clé virtuelle actuelle en fonction des informations de pose de capteur actuelles ; associer l'image clé virtuelle actuelle à une image clé historique, dans lequel si l'image clé virtuelle actuelle est une première image clé virtuelle construite après la perte du suivi SLAM, l'image clé historique est n'importe quelle image clé dans une première sous-carte, et la première sous-carte est une sous-carte SLAM construite avant la perte du suivi SLAM ; ou, si l'image clé virtuelle actuelle est une image clé virtuelle quelconque construite après la première image clé virtuelle, l'image clé historique est une image clé quelconque construite avant un moment actuel ;

dans lequel la première unité d'association (304) est configurée pour associer l'image clé virtuelle actuelle à une image clé historique spécifiquement comme suit :

la première unité d'association (304) est configurée pour associer l'image clé virtuelle actuelle à l'image clé historique en fonction des informations de pose de capteur correspondant à l'image clé virtuelle actuelle et des informations de pose de capteur correspondant à l'image clé historique pour mettre à jour une trajectoire de mouvement virtuelle du véhicule au moyen des informations de pose de capteur correspondant à l'image clé virtuelle actuelle, et joindre la trajectoire de mouvement virtuelle mise à jour et une première trajectoire de mouvement du véhicule, dans lequel la première trajectoire de mouvement du véhicule est générée sur la base d'informations de pose de capteur correspondant à toutes les images clés dans la première sous-carte ;

la seconde unité d'association (306) est configurée pour initialiser la seconde sous-carte en fonction des informations de pose de capteur correspondant à l'image clé virtuelle actuelle, spécifiquement comme suit :

la seconde unité d'association (306) est configurée pour acquérir des informations de pose de capteur correspondant à une image clé initiale en fonction des informations de pose de capteur correspondant à l'image clé virtuelle actuelle pour associer l'image clé virtuelle actuelle à la seconde sous-carte au moyen des informations de pose de capteur correspondant à l'image clé virtuelle actuelle et des informations de pose de capteur correspondant à l'image clé initiale, et joindre la trajectoire de mouvement virtuelle mise à jour et une seconde trajectoire de mouvement du véhicule, dans lequel la seconde trajectoire de mouvement est générée sur la base d'informations de pose de capteur correspondant à toutes les images clés dans la seconde sous-carte, et l'image clé initiale est une image clé qui est construite initialement dans la seconde sous-carte une fois l'initialisation réussie ;

dans lequel le système comprend en outre :

une unité de construction de fonction (308) configurée pour construire une fonction d'erreur en fonction des informations de pose de capteur actuelles du capteur de véhicule et des informations de pose de capteur correspondant à une pluralité d'images clés construites avant le moment actuel après que l'unité d'acquisition (302) a calculé les informations de pose de capteur actuelles du capteur de véhicule en fonction des informations de pose de véhicule actuelles ; et une unité d'optimisation de fonction (309) configurée pour optimiser une valeur des informations de pose de capteur actuelles dans la fonction d'erreur pour minimiser la fonction d'erreur afin d'obtenir des informations de pose de capteur actuelles optimisées ;

dans lequel l'unité de construction d'image clé (303) est configurée pour construire une image clé virtuelle actuelle en fonction des informations de pose de capteur actuelles, spécifiquement comme suit :

l'unité de construction d'image clé (303) est configurée pour construire l'image clé virtuelle actuelle en fonction des informations de pose de capteur actuelles optimisées.

dans lequel le système comprend en outre :

une unité de commande configurée pour calculer des informations de pose de capteur en temps réel du capteur de véhicule en fonction d'informations de pose de véhicule en temps réel du véhicule, prendre une position correspondant à n'importe quelle image clé virtuelle dans la trajectoire de mouvement virtuelle mise à jour s'il est détecté que les informations de pose de capteur en temps réel correspondent à des informations de pose de capteur correspondant à n'importe quelle image clé virtuelle dans la trajectoire de mouvement virtuelle mise à jour, et commander le véhicule pour qu'il se déplace le long d'un chemin guidé par la trajectoire de mouvement virtuelle mise à jour jusqu'à ce qu'il soit détecté que le véhicule entre dans une portée de positionnement de la seconde sous-carte.

4. Système selon l'une quelconque des revendications 3, **caractérisé en ce que** l'unité d'optimisation de carte (307) comprend :

une première sous-unité d'optimisation de graphique configurée pour optimiser un premier graphique de pose correspondant à la première sous-carte afin d'obtenir un premier graphique de pose optimisé ; une seconde sous-unité d'optimisation de graphique configurée pour optimiser un second graphique de pose correspondant à la seconde sous-carte afin d'obtenir un second graphique de pose optimisé ; et

une sous-unité d'intégration configurée pour intégrer le premier graphique de pose optimisé et le second graphique de pose optimisé afin de générer la carte SLAM complète.

101

A map stitching system carries out SLAM initialization again when detecting that SLAM tracking is lost

102

The map stitching system acquires current vehicle information by a positioning module of the vehicle and calculates current sensor pose information of a vehicle sensor according to the current vehicle pose information

103

The map stitching system constructs a current virtual key frame according to the current sensor pose information

104

The map stitching system associates the current virtual key frame with a historical key frame

105

The map stitching system determines whether the SLAM initialization succeeds

No

Yes

106

The map stitching system constructs a second sub-map and initializes the second sub-map by means of the sensor pose information corresponding to the current virtual key frame to stitch the first sub-map and the second sub-map, wherein the first sub-map is a SLAM map constructed before the SLAM tracking is lost

107

The map stitching system carries out global joint optimization on the first sub-map and the second sub-map to generate a complete SLAM map

FIG. 1

A map stitching system calculates SLAM initialization again when detecting that SLAM tracking is lost
⟋201

The map stitching system acquires current vehicle pose information by a positioning module of a vehicle and calculates current sensor pose information of a vehicle camera according to the current vehicle pose information
⟋202

The map stitching system constructs an error function according to the current sensor pose information and sensor pose information corresponding to a plurality of key frames constructed before the current moment
⟋203

The map stitching system optimizes the value of the current sensor pose information in the error function to minimize the error function to obtain optimized current sensor pose information
⟋204

The map stitching system constructs a current virtual key frame according to the optimized current sensor pose information
⟋205

The map stitching system associates the current virtual key frame with a historical key frame
⟋206

No

The map stitching system determines whether the SLAM initialization succeeds
⟋207

Yes

The map stitching system constructs a second sub-map and optimizes the second sub-map by means of the sensor pose information corresponding to the current virtual key frame to stitch the first sub-map and the second sub-map, wherein the first sub-map is a SLAM map constructed before the SLAM tracking is lost
⟋208

The map stitching system optimizes a first pose graph corresponding to the first sub-map to obtain an optimized first pose graph
⟋209

The map stitching system optimizes a second pose graph corresponding to the second sub-map to obtain an optimized second pose graph
⟋210

The map stitching system integrates the optimized first pose graph and the optimized second pose graph to generate the complete SLAM map
⟋211

FIG. 2

FIG. 3

FIG. 4

**EP 3 886 048 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160179830 A1

- US 20150103183 A1

**Non-patent literature cited in the description**

- Multiple Maps for the Feature-based Monocular SLAM System. **HU HUAN et al.** JOURNAL OF INTELLIGENT. SPRINGER, 17 May 2018, vol. 94, 389-404